# EUROPEAN PATENT SPECIFICATION

(11) **EP 3 279 011 B1**
(45) Date of publication and mention of the grant of the patent: **29.01.2020**
(21) Application number: 16771792.5
(22) Date of filing: 30.03.2016
(51) Int. Cl.: B60C 11/03, B60C 1/00, B60C 11/00, B60C 11/12, B60C 11/13, C08K 3/04, C08L 7/00, C08L 9/00, C08L 61/10, C08L 91/00, C08L 93/00

(54) **TIRE**
REIFEN
PNEUMATIQUE

(30) Priority: 01.04.2015 JP 2015075323
(43) Date of publication of application: 07.02.2018
(73) Proprietor: Bridgestone Corporation, Tokyo 104-8340 (JP)
(72) Inventor: TOMIDA, Tatsuya, Tokyo 104-8340 (JP); SAKURAI, Hideyuki, Tokyo 104-8340 (JP)
(74) Representative: Oxley, Robin John George
(86) International application number: PCT/JP2016/001858
(87) International publication number: WO 2016/157906

(56) References cited:
- WO-A1-2013/065319
- WO-A1-2015/037464
- WO-A1-2016/051651
- JP-A- 2002 179 842
- JP-A- 2010 254 166
- JP-A- 2011 111 497
- JP-A- 2012 158 697
- JP-A- 2012 511 616
- JP-B1- 5 360 333
- US-A- 4 748 199
- US-A1- 2014 290 820

## Description

### TECHNICAL FIELD

This disclosure relates to a tire.

### BACKGROUND

In view of improving vehicle safety, it is desired to improve tire's braking performance and driving performance not only on a dry road surface but on various road surfaces such as a wet road surface and an icy and snowy road surface.

For example, PTL1 (JPH09-67469A) discloses a tire using a tread rubber with increased 0°C tan *δ* for the purpose of improving the gripping performance on wet road surface.

On the other hand, in the case where a tire is used throughout a year, since the road surface temperature varies depending on change of the seasons, etc., there are cases that the fuel efficiency varies when the tire runs in ordinary temperature environment and when the tire runs in low temperature environment. It has been discovered that such variation of fuel efficiency increases as the 0°C tan *δ* increases. Then, we discovered that by using a rubber composition having specific physical properties (specifically, a tan *δ* at 0°C being 0.25 to 0.55, a difference between a tan *δ* at 30°C and a tan *δ* at 60°C being -0.02 to 0.07, and a dynamic storage modulus at a dynamic strain of 1% and 0°C being 4 MPa to 20 MPa) to a tread, it is possible to reduce the difference between the fuel efficiency in low temperature environment and the fuel efficiency in ordinary temperature environment, and to sufficiently ensure the wet performance. PTL 2 and PTL 3 relate to a pneumatic tire.

### CITATION LIST

### Patent Literature

PTL 1: JPH09-67469A
PTL 2: US 4 748 199 A
PTL 3: US 2014/290820 A1

### SUMMARY

### (Technical Problem)

However, in a tire using a tread rubber having the aforementioned physical properties, further improvement of the braking performance on dry road surface is desired, and better wet braking performance is requested on a road surface which is more slippery as compared to asphalt, such as manhole and the like.

Therefore, it was desired to improve the braking performance on dry road surface and on wet road surface by further studying the formulation of the rubber composition. However, even in the case where it was possible to improve the braking performance on dry road surface and on wet road surface by studying the formulation of the rubber composition, deterioration of the steering stability was predicted. Since optimization of the formulation of the rubber composition is for the purpose of improving the braking performance by adjusting the loss property at low temperature and at high temperature, the rigidity of the tread was not considered, and there was a risk of deterioration of the steering stability due to deterioration of the tread rigidity.

Then, this disclosure aims to provide a tire having excellent braking performance on dry road surface and on wet road surface, and having excellent steering stability.

### (Solution to Problem)

In order to achieve the aforementioned purpose, we have intensively studied a tire including a tread formed by using a rubber composition having specific physical properties.

Further, we discovered that regarding the tread, by setting a negative ratio in a footprint within a specific range, and setting a negative ratio derived from a circumferential groove and a negative ratio derived from grooves other than the circumferential groove within a specific range as well, it is possible to improve the land portion rigidity of the tread, and thus it is possible to achieve both excellent braking performance on dry road surface and on wet road surface and excellent steering stability. Thereby, we have accomplished this disclosure.

In this regard, the present invention provides a tire as set out in claim 1.

The tire of this disclosure is a tire comprising a tread formed by using a rubber composition of which a tan*δ* at 0°C is 0.25 to 0.55, a difference between a tan*δ* at 30°C and a tan*δ* at 60°C is -0.02 to 0.07, and a dynamic storage modulus at a dynamic strain of 1% and 0°C is 4 MPa to 20 MPa, wherein: the tread has a circumferential groove extending continuously in a tire circumferential direction; a negative ratio in a footprint is 15% to 25%; a negative ratio derived from the circumferential groove is 8% to 14%; and a negative ratio derived from grooves other than the circumferential groove is 7% to 11%.

According to the aforementioned configuration, it is possible to achieve both excellent braking performance on dry road surface and on wet road surface and excellent steering stability.

In the tire of this disclosure, the tread has a central region partitioned by two circumferential grooves located on tire widthwise outermost sides among the circumferential grooves, and two side regions on tire widthwise outer sides of the central region; and a negative ratio of the two side regions in a footprint is larger than a negative ratio of the central region in a footprint. A ratio of an area of a central land portion located within the central region to an area of an entire tire land portion on the footprint of the tread is 40% to 60%, an independent land portion width of the central land portion being 1.5 times or more of a groove depth of the circumferential groove adjacent on a tire widthwise outer side of the central land portion.

This is because that it is possible to achieve more excellent steering stability.

In the tire of this disclosure, it is preferable that the central land portion has a plurality of widthwise narrow grooves which open to one of the circumferential grooves and do not connect to another adjacent circumferential groove. Further, it is more preferable that the widthwise narrow grooves extend in a direction at 50° to 85° with respect to the tire circumferential direction, and that the widthwise narrow grooves are arranged alternately in the tire circumferential direction with widthwise narrow grooves extending oppositely across a tire equator, an arranging interval in the tire circumferential direction of widthwise narrow grooves opening to the same circumferential groove being 0.5% to 4.5% of a circumferential length of a tire equatorial plane on a tread surface, or that the widthwise narrow grooves are comprised of sipes and/or notch grooves.

This is because that it is possible to ensure the land portion rigidity of 5 the tread, and to simultaneously further improve the braking performance when wet.

In the tire of this disclosure, it is preferable that side land portions located within the side regions have lug grooves, each of the lug grooves not connecting to an adjacent one of the circumferential grooves, or connecting to the adjacent one of the circumferential grooves in a state where a part of a groove bottom is raised up.

This is because that it is possible to achieve more excellent steering stability.

In the tire of this disclosure, it is preferable that the tread is formed with a rubber composition containing: a rubber component **A** containing 50 mass% or more of a diene based rubber; and 5 to 50 parts by mass per 100 parts by mass of the rubber component of at least one additive component **B** selected from a thermoplastic resin, an oil or a low molecular weight aromatic vinyl compound-conjugated diene compound copolymer with a polystyrene-equivalent weight-average molecular weight of 5,000 to 200,000 measured by gel permeation chromatography.

This is because that it is possible to improve the braking performance on dry road surface and on wet road surface more securely.

Moreover, in the tire of this disclosure, it is preferable that the diene based rubber is a natural rubber or a butadiene rubber.

This is because that it is possible to improve the braking performance on dry road surface and on wet road surface more securely.

In the tire of this disclosure, it is preferable that the thermoplastic resin is a C5 based resin, a C9 based resin, a C5 to C9 based resin, a dicyclopentadiene based resin, a rosin based resin, an alkylphenol based resin, or a terpenephenol based resin.

This is because that it is possible to improve the braking performance on dry road surface and on wet road surface more securely.

In the tire of this disclosure, it is more preferable that the additive component **B** contains a Novolac-type phenol resin.
This is because that it is possible to achieve more excellent steering stability.

In the tire of this disclosure, it is preferable that the rubber composition further contains a carbon black with a nitrogen adsorption specific surface area of 110 m²/g or more and a carbon black with a nitrogen adsorption specific surface area of 80 m²/g or less.

This is because that it is possible to achieve more excellent steering stability.

In the tire of this disclosure, it is preferable that the rubber composition contains 50 mass% or more of a styrene-butadiene rubber of which the percentage of a bound styrene content among all polymer units +the percentage of a vinyl bond content among all polymer units ×1/2 equals 25% or less.

This is because that it is possible to improve the braking performance on dry road surface and on wet road surface more securely.

### (Advantageous Effect)

According to this disclosure, it is possible to provide a tire having excellent braking performance on dry road surface and on wet road surface, and having excellent steering stability.

### BRIEF DESCRIPTION OF THE DRAWINGS

FIG. 1 is a partial development view illustrating a tread pattern of a tire according to an embodiment of this disclosure;
FIG. 2 is a partial development view illustrating a tread pattern of a tire according to another embodiment of this disclosure;
FIG. 3 schematically illustrates a cross section in the groove extending direction of the lug groove of the tread pattern in FIG. 1;
FIG. 4 is a partial development view illustrating a tread pattern of a tire as a sample of an example for this disclosure;
FIG. 5 is a partial development view illustrating a tread pattern of a tire as a sample of a comparative example; and
FIG. 6 is a partial development view illustrating a tread pattern of a tire as a sample of a comparative example.

### DETAILED DESCRIPTION

An embodiment of the tire of this disclosure will be described below with reference to the drawings.

The tire of this disclosure is a tire including a tread formed by using a rubber composition containing a rubber component and a thermoplastic resin.

Further, although not illustrated, the tire of this disclosure, as usual ones, may have a configuration having: a pair of bead portions; a carcass which is formed by a pair of sidewall portions continuous to tire radial outer sides of the bead portions and a tread portion extending between the sidewall portions, and extends toroidally across these portions between bead cores embedded in the bead portions; a belt formed by a plurality of belt layers arranged on a tire radial outer side of a crown portion of the carcass; and a tread disposed on a tire radial outer side of the belt.

### <Structure of tread>

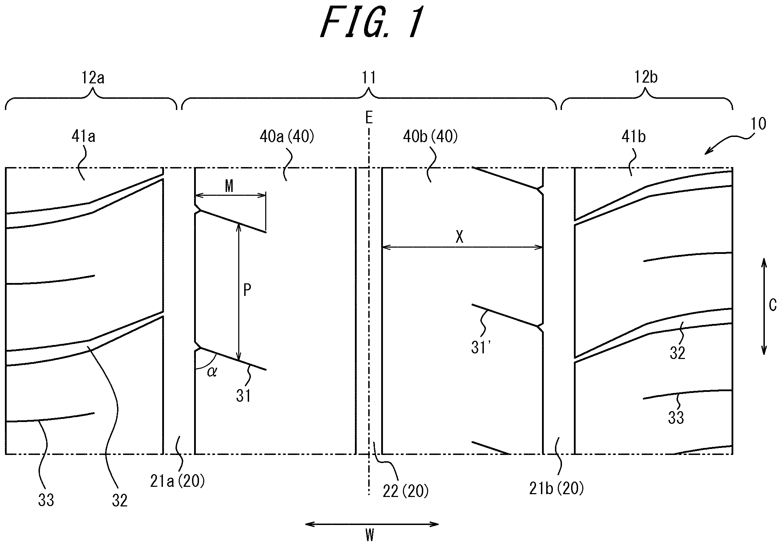

As illustrated in FIG. 1, the tread 10 constituting the tire of this disclosure has circumferential grooves 20 extending continuously in the tire circumferential direction C (extending linearly along the tire circumferential direction as for the example of FIG. 1), the negative ratio in the footprint (a ratio (%) of a footprint area of a groove part with respect to a footprint area of the tread 10) being 15% to 25%, the negative ratio derived from the circumferential grooves 20 (a ratio (%) of a footprint area of the circumferential grooves 20 to the footprint area of the tread 10) being 8% to 14%, and the negative ratio derived from the grooves other than the circumferential grooves (a ratio (%) of a footprint area of the grooves other than the circumferential grooves 20 with respect of the footprint area of the tread 10) being 7% to 11%.

By defining the negative ratio in the footprint of the tread within the aforementioned range, and specifically defining the ratio of the circumferential grooves among the negative ratio within the aforementioned range, it is possible to increase the land portion rigidity of the tread, and as a result, it is possible to achieve excellent steering stability as compared to conventional tires using to a tread a rubber composition containing a thermoplastic resin.

Here, the footprint of the tread 10 refers to the outer circumferential surface around the entire circumference of the tire, which contacts the road surface when the tire is rotated in a state mounted to an applicable rim with specified air pressure filled and a load corresponding to the maximum load capability applied.

Here, the "applicable rim" is a valid industrial standard for the region in which the tire is produced or used and refers to an approved rim of applicable size as described in the JATMA YEAR BOOK by JATMA (the Japan Automobile Tyre Manufacturers Association) in Japan, the STANDARDS MANUAL by ETRTO (the European Tyre and Rim Technical Organisation) in Europe, the YEAR BOOK by TRA (the Tire and Rim Association, Inc.) in the United States of America, and the like (Measuring Rim in the STANDARDS MANUAL by the ETRTO, and Design Rim in the YEAR BOOK by the TRA). Moreover, the "prescribed internal pressure" refers to an air pressure in accordance with the maximum load capability corresponding to the maximum load capability of the applicable size/ply rating described by the aforementioned JATMA, etc. The "maximum load capability" refers to the maximum mass that the tire is allowed to bear according to the aforementioned standards.

Here, the negative ratio in the footprint of the tread 10 is set to 15% to 25% because that in a tire using to a tread a specific rubber composition mentioned below, if the negative ratio is less than 15%, the negative ratio is excessively small, and thus there is a risk that necessary drainage performance and gripping performance cannot be ensured, while on the other hand, if the negative ratio is more than 25%, sufficient land portion rigidity of the tread cannot be obtained, and thus the desired steering stability cannot be ensured. Form the same viewpoint, it is preferable that the negative ratio in the footprint of the tread 10 is 20% to 25%.

Moreover, the negative ratio derived from the circumferential grooves 20 in the footprint is set to 8% to 14%, and the negative ratio derived from the grooves other than the circumferential grooves is set to 7% to 11%, because that in a tire using to a tread the specific rubber composition mentioned below, by setting the negative ratio derived from the circumferential grooves 20 within the aforementioned range, it is possible to improve the land portion rigidity of the tread. In the case where the negative ratio derived from the circumferential grooves 20 is less than 8%, or in the case where the negative ratio derived from the grooves other circumferential grooves is less than 7%, since the ratio of the land portion is increased, even if possible to ensure the land portion rigidity, necessary drainage performance and gripping performance cannot be ensured. On the other hand, in the case where the negative ratio derived from the circumferential grooves 20 is more than 14%, or in the case where the negative ratio derived from the grooves other circumferential grooves is more than 11%, sufficient land portion rigidity of the tread cannot be obtained, and thus the desired steering stability cannot be achieved.

From the same viewpoint, the negative ratio derived from the circumferential grooves 20 is preferably 10% to 14%, and the negative ratio derived from the grooves other than the circumferential grooves is 9% to 11%.

As illustrated in FIG. 1, the tread 10 is divided into: a central region 11 partitioned by two circumferential grooves 21a, 21b located on tire widthwise outermost sides among the circumferential grooves 20; and two side regions 12a, 12b located on tire widthwise outer sides of the central region 11.

Here, borderlines between the central region 11 and the side regions 12a, 12b are widthwise centers of the two circumferential grooves 21a, 21b.

The central region 11 has a central land portion 40 (the central land portions 40a, 40b in the example of FIG. 1) formed by partitioning by the circumferential grooves 20 (the circumferential grooves 21a, 22, 21b in the example of FIG. 1), and the side regions 12a, 12b have side land portions 41a, 41b.

Here, the negative ratio of both the side regions 12a, 12b in the footprint is larger than the negative ratio of the central region 11 in the footprint. Since the rigidity of the central region 11 is important when considering improvement of the steering stability, by setting the negative ratio of the central region 11 to a small value, it is possible to achieve more excellent steering stability without deteriorating the drainage performance and the gripping performance.

A ratio of a total area of the central land portions 40a, 40b located in the central region 11 with respect to an area of the entire tire land portion on the footprint of the tread 10 (the central land portions 40a, 40b and the side land portions 41a, 41b in the example of FIG. 1) is 40% to 60%, preferably 50% to 60%. This is because that by setting the volume of the central region 11 to a large value, it is possible to increase the land portion rigidity, and to thereby obtain more excellent steering stability.

Moreover, from the point of obtaining the same effect, as illustrated in FIG. 1, an independent land portion width X of the central region 11 is 1.5 times or more, preferably 3 times or more of the groove depth of the circumferential groove 21b adjacent on the tire widthwise outer side. Here, as illustrated in FIG. 1, in the case where the central region 11 has two central land portions 40a, 40b separated in the tire width direction by the circumferential groove 22, an independent land portion width of the central region 11 refers to the width X of an independent central land portion (the central land portion 40b in the example of FIG. 1).

The number of the circumferential grooves 20 is not specifically limited. For example, it is possible to use one constituted by the two circumferential grooves 21a, 21b located on the tire widthwise outer sides and the one circumferential groove 22 located on the tire widthwise center as illustrated in FIG. 1, or increase the number of circumferential grooves 21 located on the tire widthwise outer sides and/or the number of the circumferential grooves 22 located on the tire widthwise center.

As illustrated in FIG. 1, it is preferable that the central land portions 40a, 40b have a plurality of widthwise narrow grooves 31, 31' with a small groove width, which open to the circumferential grooves (the circumferential grooves 21a, 21b in the example of FIG. 1) and do not connect to another adjacent circumferential groove (the circumferential groove 22 in the example of FIG. 1). This is because that by disposing the widthwise narrow grooves 31, 31' within the central land portion, it is possible to ensure the rigidity of the central region 11, and to simultaneously improve the braking performance when wet via a water film removal effect of each narrow groove 31, 31'.

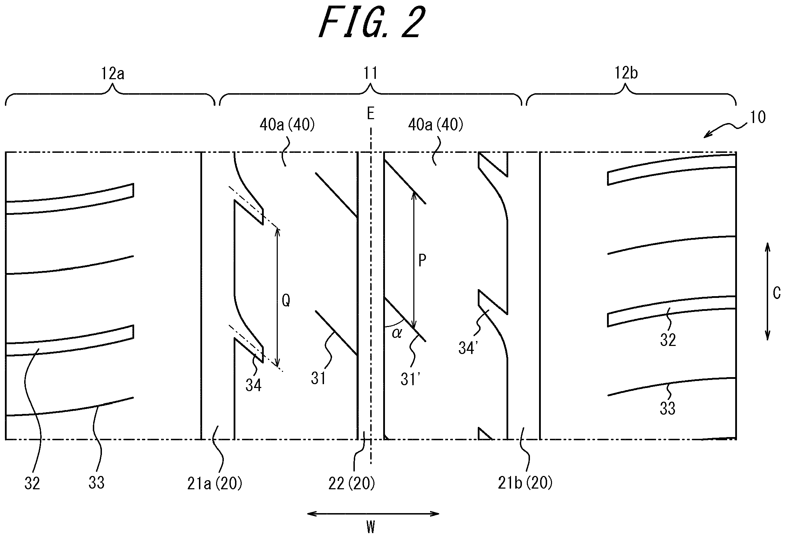

Here, the circumferential grooves to which the widthwise narrow grooves 31, 31' open are not specifically limited. For example, it is possible to use one opening to the circumferential grooves 21a, 21b located on the tire widthwise outer sides as illustrated in FIG. 1, or one opening to the circumferential groove 22 located on the tire widthwise central side as illustrated in FIG. 2.

The widthwise narrow grooves 31, 31' more preferably extend in a direction at 50° to 85° (i.e., an extension angle α with respect to the tire circumferential direction of the widthwise narrow groove satisfies 50°≤α≤85°), particularly preferably extend in a direction at 60° to 80° with respect to the tire circumferential direction C. This is because that it is possible to maintain the rigidity of the central region 11 at a high level, and to simultaneously improve the braking performance when wet via a water film removal effect of each narrow groove 31, 31'.

As illustrated in FIG. 1, it is preferable that the widthwise narrow grooves 31 are arranged alternately in the tire circumferential direction C with the widthwise narrow grooves 31' extending oppositely across the tire equator E, the arranging interval P of the widthwise narrow grooves 31, 31' opening to the same circumferential grooves 21a, 21b being 0.5% to 4.5% of the circumferential length of the tire equatorial plane on the tread surface. This is because that by arranging the widthwise narrow grooves 31 and the widthwise narrow grooves 31' alternately across the tire equator E, it is possible to achieve both the braking performance when wet and the steering stability at a high level.

It is preferable that the widthwise narrow grooves 31, 31' are comprised of sipes and/or notch grooves. Here, the sipes refer to ultra narrow grooves with a groove width (an opening width to the tread footprint; the same hereinafter) of 1.5 mm or less, and the notch grooves refer to narrow grooves with a groove width of 1.5 mm to 3.5 mm.

As illustrated in FIG. 1, a tire widthwise length M of the widthwise narrow grooves 31, 31' is not specifically limited, but from the viewpoint of achieving both the braking performance when wet and the steering stability at a high level, the degree with respect to the land portion width X (M/X) is preferably within a range of 0.2≤M/X≤0.8, more preferably 0.3≤M/X≤0.7.

As illustrated in FIG. 2, the central region 11 may have lug grooves 34, 34' other than the widthwise narrow grooves 31, 31'. In this case, regarding the lug grooves 34, 34' arranged on the central region 11, similarly as the widthwise narrow grooves 31, 31', the lug grooves 34 are arranged alternately in the tire circumferential direction C with the lug grooves 34'extending oppositely across the tire equator E, the arranging interval Q of the lug grooves 34, 34' opening to the same circumferential grooves 21a, 21b being 0.5% to 4.5% of the circumferential length of the tread. Moreover, it is possible to have narrow widthwise grooves other than the lug grooves 34 as well.

As illustrated in FIG. 1, the side regions 12a, 12b may have lug grooves 32 and side region narrow grooves 33.

Here, it is preferable that the lug grooves 32 in FIG. 1 do not connect to the adjacent circumferential grooves 21a, 21b, or connect to the circumferential grooves 21a, 21b in a state where a part of the groove bottom is raised up. This is because that by configuring the lug grooves 32 as mentioned above, it is possible to obtain excellent braking performance, and to simultaneously ensure the land portion rigidity of the tread, and to thereby achieve the desired steering stability.

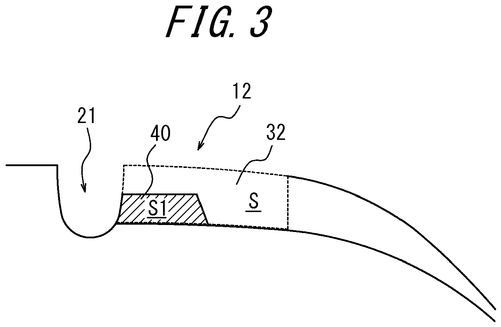

Here, in order to describe the configuration of the lug grooves 32, FIG. 3 schematically illustrate a cross section in a groove extension direction of the lug grooves 32 in FIG. 1. "The lug grooves 32 connect to the circumferential grooves 21a, 21b in a state where a part of the groove bottom is raised up" means that as illustrated in FIG. 3, the lug grooves 32 connect to the circumferential grooves 21a, 21b in a state where a part 40 in which the groove bottom of the lug grooves 32 is raised up is formed in a connecting part to the circumferential grooves 21.

In the case where the lug grooves 32 connect to the circumferential grooves 21a, 21b in a state where the groove bottom is raised up, as illustrated in FIG. 3, in the extension-direction cross section of the lug grooves 32, a ratio of a cross-section area S1 of the raised bottom part 40 to a cross-section area S of an entire lug groove 32 (S1/S×100%) is preferably 20% or more, more preferably 30% or more. This is because that it is possible to ensure the land portion rigidity of the tread more securely even when lug grooves are disposed.

As illustrated in FIG. 1, it is preferable that a groove width of the lug grooves 32 is reduced from a tire widthwise outer side toward a tire widthwise central side. This is because that in the case where end portions of the lug grooves 32 are adjacent or connect to the circumferential grooves 21a, 21b, by reducing the groove width of the lug grooves 32 from the tire widthwise outer side to the tire widthwise central side, it is possible to ensure the land portion rigidity of the tread more securely even when lug grooves are disposed.

### <Rubber composition>

The tire of this disclosure has a tread formed with a rubber composition of which a tan *δ* at 0°C is 0.25 to 0.55, a difference between a tan *δ* at 30°C and a tan *δ* at 60°C is -0.02 to 0.07, and a dynamic storage modulus at a dynamic strain of 1% and 0°C is 4 MPa to 20 MPa.
If the rubber composition has these physical properties, the obtained tread rubber is capable of achieving excellent braking performance on dry road surface and on wet road surface.

The rubber composition is not specifically limited as long as satisfying the aforementioned physical properties, but more specifically, the rubber composition is preferably a rubber composition containing: a rubber component **A** containing 50 mass% or more of a diene based rubber; and 5 to 50 parts by mass per 100 parts by mass of the rubber component of at least one additive component **B** selected from a thermoplastic resin, an oil or a low molecular weight aromatic vinyl compound-conjugated diene compound copolymer with a polystyrene-equivalent weight-average molecular weight of 5,000 to 200,000 measured by gel permeation chromatography.

By compounding a specific amount of the additive component **B** with respect to the rubber component **A** as mentioned above, it is possible to improve the grounding property of the tread rubber, and to improve the performances on wet road surface of the tire. Moreover, since the additive component **B** has a particularly high compatibility with natural rubber or diene based rubbers such as butadiene rubber, it is particularly easy to obtain its compounding effect in rubber component **A** rubber composition containing 50 mass% or more of a diene based rubber. Moreover, the rubber component itself has a high softness by containing 50 mass% or more of a diene based rubber, and thus is capable of achieving high braking performance on dry road surface and on slippery road surface such as manhole and the like.

The rubber component **A** contains 50 mass% or more, preferably 70 mass% or more, more preferably 80 mass% or more of a diene based rubber. By setting the diene based rubber content to 50 mass% or more in the rubber component, the effect of thermoplastic resin compounding mentioned below is sufficiently exhibited.

Here, the diene based rubber is not specifically limited, and is exemplified as natural rubber, styrene-butadiene rubber, isoprene rubber, butadiene rubber, chloroprene rubber, acrylonitrile-butadiene rubber, isobutylene-isoprene rubber, etc., but among these, from the viewpoint of achieving more excellent braking performance, it is preferable to use natural rubber or butadiene rubber. Here, the diene based rubber may be used singly or in a combination of a plurality. Furthermore, it is more preferable to contain 40 mass% or more of the natural rubber, particularly preferable to contain 70 mass% or more of the natural rubber.

It is preferable that the rubber component **A** contains a styrene-butadiene rubber (SBR). This is because that by compounding with SBR, it is possible to raise the glass transition temperature (Tg) of the rubber composition, and to thereby improve the steering stability on dry road surface and the braking performance.

Furthermore, it is preferable that the rubber composition uses as the SBR an SBR of which the percentage of a styrene bound content among all polymer units+the percentage of a vinyl bond content among all polymer units×1/2 equals 25 mass% or less. If the percentage of the styrene bound content and the percentage of the vinyl bond content within all polymer units satisfy the aforementioned correlation, it is possible to further improve the wet performance of the rubber composition, and to thereby further improve the braking performance on dry road surface and on wet road surface of the tire.

The thermoplastic resin contained as the additive component **B** in the rubber composition is not specifically limited. By using a thermoplastic resin, the loss tangent (tan *δ*) at 0°C is raised, and thus it is possible to improve mainly the performances on wet road surface of the tire. In the case where the rubber component contains a large amount of natural rubber, since the thermoplastic resin has a high compatibility with the natural rubber, it is particularly easy to obtain the aforementioned performance improvement effect on wet road surface.

From the viewpoint of further improvement of the braking performance on dry road surface and on wet road surface, it is preferable that the thermoplastic resin is a C5 based resin, a C9 based resin, a C5 to C9 based resin, a dicyclopentadiene based resin, a rosin based resin, an alkylphenol based resin, or a terpenephenol based resin. These thermoplastic resins may be used singly or in a combination of a plurality.

Here, the C5 based resin refers to a C5 based synthetic petroleum resin, which is a solid polymer obtained by polymerizing a C5 fraction using a catalyst for the Friedel-Crafts reaction, such as AlCl₃, BF₃ and the like. Specific examples thereof may include: a copolymer including, as main components, isoprene, cyclopentadiene, 1,3-pentadiene, and 1-pentene; a copolymer of 2-pentene and dicyclopentadiene; a polymer mainly composed of 1,3-pentadiene, etc.

Here, the C9 based resin refers to a C9 based synthetic petroleum resin, which is a solid polymer obtained by polymerizing a C9 fraction using a catalyst for the Friedel-Crafts reaction, such as AlCl₃, BF₃ and the like. Specific examples thereof may include a copolymer including, as main components, indene, methylindene, α-methylstyrene, vinyltoluene, etc.

The C5 to C9 based resin refers to a C5 to C9 based synthetic petroleum resin, which is a solid polymer obtained by polymerizing a C5 to C9 fraction using a catalyst for the Friedel-Crafts reaction, such as AlCl₃, BF₃ and the like. Specific examples thereof may include a copolymer including, as main components, styrene, vinyltoluene, α-methylstyrene, indene, etc. In this disclosure, from the viewpoint of the compatibility with the rubber component, this C5 to C9 resin is preferably a resin with a small amount of a component of C9 or more. Here, "a small amount of a component of C9 or more" means that the component of C9 or more is less than 50 mass%, preferably 40 mass% or less in the entire amount of the resin.

The dicyclopentadiene based resin refers to a petroleum resin using the dicyclopentadiene in the C5 fraction as a main raw material. Specific examples thereof include trade name "Marcarez M" series (M-890A, M-845A, M-990A, etc.), made by Maruzen Petrochemical Co., Ltd.

The rosin resin include: natural resin rosins such as gum rosin, tall oil rosin and wood rosin contained in raw rosin or tall oil; modified rosin, rosin derivative and modified rosin derivative such as polymerized rosin, partially hydrogenated rosin thereof; glycerin ester rosin, partially hydrogenated rosin and completely hydrogenated rosin thereof; pentaerythritol ester rosin, partially hydrogenated rosin and polymerized rosin thereof, etc.

The alkylphenol based resin refers to a phenol based resin having an alkyl group. Examples thereof include alkylphenol-acetylene resin such as p-tert-butylphenol-acetylene resin, alkylphenol-formaldehyde resin with a low degree of polymerization, etc.

The terpene phenol based resin refers to a resin obtainable by reacting terpenoids and various phenols by using a Friedel-Crafts catalyst, or further condensing the same with formalin. Terpenoids for use as the material are not particularly limited, and may preferably be a monoterpene hydrocarbon such as α-pinenes and limonenes, more preferably terpenoids including α-pinenes, and particularly preferably be α-pienes.In this disclosure, terpene-phenol based resin having a large ratio of phenol component is preferable.

It is preferable that the rubber composition contains a Novolak-type phenol resin. By containing a Novolac-type phenol resin, it is possible to raise the elastic modulus in the rubber composition and to thereby improve the steering stability without using a curing agent, and without deteriorating the wet performance.

The content of the thermoplastic resin in the rubber composition is 5 to 50 parts by mass per 100 parts by mass of the rubber component, but from the viewpoint of the capability of obtaining more excellent braking performance on dry road surface and on wet road surface, 10 to 30 parts by mass is preferable.

The oil contained as the additive component **B** in the rubber composition is not specifically limited. Examples for the oil may include: petroleum-based softeners such as aroma oil, paraffin oil, spindle oil, naphthene oil, MES, TDAE and SRAE; and plant-based softeners such as palm oil, castor oil, cottonseed oil and soybean oil. The oil to be compounded may preferably be in a liquid state at ordinary temperature such as 25°C in view of handling easiness. Of those described above, for example, a petroleum-based softener such as aroma oil, paraffin oil and naphthene oil is preferred.

It is preferable that the additive component **B** contained in the rubber composition is a low molecular weight aromatic vinyl compound-conjugated diene compound copolymer with a polystyrene-equivalent weight-average molecular weight of 5,000 to 200,000 measured by gel permeation chromatography. By using an aromatic vinyl compound-conjugated diene compound copolymer with an average molecular weight of 5,000 to 200,000, it is possible to improve the softness of the rubber composition, and to achieve high braking performance on dry road surface and on slippery road surface such as manhole and the like. Further, in order to sufficiently improve the wet performance of the rubber composition, it is preferable that a content of the aromatic vinyl compound is 5 to 80 mass%, and a vinyl bonding amount of a conjugated diene compound moiety is 10 to 80 mass%.

The rubber composition may contain a filler other than the rubber component and the additive component **B.** By containing a filler (C), it is possible to achieve high reinforcement performance and low heat generating property without deteriorating the properties of the rubber, such as the softness.

A compounding amount of the filler in the rubber composition is not specifically limited, but is preferably 30 to 100 parts by mass, more preferably 40 to 80 parts by mass per 100 parts by mass of the rubber component.

By setting the compounding amount of the filler to 30 to 100 parts by mass, it is possible to exhibit the reinforcing effect of the rubber component without deteriorating its properties such as the softness, and on the other hand, by setting the compounding amount of the filler to 40 to 80 parts by mass, in particular, it is possible to exhibit the effect of reduction of the rolling resistance and improvement of the braking performance on wet road surface, and to simultaneously decrease the probability of deteriorating the softness of the rubber component.

The type of the filler (C) is not specifically limited, and is exemplified as fillers such as silica, carbon black, aluminum oxide, clay, alumina, talc, mica, kaolin, glass balloon, glass beads, calcium carbonate, magnesium carbonate, magnesium hydroxide, calcium carbonate, magnesium oxide, titanium oxide, potassium titanate and barium sulfate.

Among the aforementioned filler (C), from the view point of exhibiting the effect of reduction of the rolling resistance and improvement of the braking performance on wet road surface, and simultaneously decreasing the probability of deteriorating the softness of the rubber component, it is preferable to use silica. By containing silica in the rubber composition, it is possible to apply sufficient reinforcement performance and low heat generating property to it in a state where the diene based rubber and the thermoplastic resin are well dispersed, without deteriorating its softness.

Examples of silica may include: wet silica (hydrous silica), dry silica (anhydrous silica), calcium silicate, aluminum silicate, with wet silica being suitably used in particular. This wet silica has BET specific surface area of preferably 40 m²/g to 350 m²/g. A silica within this range of BET specific surface area has the advantage of the capability of achieving both the rubber reinforcement performance and the dispersibility in the rubber component. From this viewpoint, a silica with a BET specific surface area of 80 m²/g to 300 m²/g is further preferable. Such silica may be commercially available ones, such as trade names "Nipsil AQ", "Nipsil KQ", made by Tosoh Silica Corporation, and trade name "Ultrasil VN3", made by Degussa AG. This silica may be used singly or in a combination of two or more.

Further, a compounding amount of the silica is preferably within a range of 40 to 70 parts by mass, more preferably within a range of 45 to 60 parts by mass per 100 parts by mass of the rubber component. If the compounding amount of the silica is 40 parts by mass or more per 100 parts by mass of the rubber component, tan *δ* at 60°C of the rubber composition is reduced, which improves the fuel efficiency during ordinary running of a tire applied with the rubber composition. Moreover, if 70 parts by mass or less, the softness of the rubber composition is improved, and by applying the rubber composition to a tread rubber of a tire, a deformation volume of the tread rubber is increased, which enables improvement of the wet performance of the tire. Moreover, among the filler (C), if the silica is 50 mass% or more, preferably 70 mass% or more, further more preferably 90 mass% or more, the braking performance on wet road surface is further improved.

In the rubber composition of this disclosure, it is preferable that the filler (C) further contains a carbon black, and a compounding amount of the carbon black is preferably within a range of 1 to 10 parts by mass, more preferably within a range of 30 to 80 parts by mass per 100 parts by mass of the rubber component. By compounding the carbon black by 1 part by mass or more, the rigidity of the rubber composition is improved, and by compounding by 10 parts by mass or less, it is possible to suppress the increase of the loss tangent (tan *δ*). Therefore, by applying the rubber composition to a tread rubber of a tire, it is possible to achieve both the fuel efficiency and the wet performance of the tire at a high level. The carbon black is not specifically limited, and is exemplified as carbon blacks of GPF, FEF, HAF, ISAF, SAF grade. Among these, from the viewpoint of improving the wet performance of the tire, a carbon black of ISAF and SAF grade is preferable. These carbon blacks may be used singly or in a combination of two or more.

As the carbon black, it is preferable that the rubber composition further contains a carbon black with a nitrogen adsorption specific surface area of 110 m²/g or more and a carbon black with a nitrogen adsorption specific surface area of 80 m²/g or less. By compounding a carbon black with a nitrogen adsorption specific surface area of 110 m²/g or more, it is possible to ensure the wet performance at a high level, and by simultaneously compounding a carbon black with a nitrogen adsorption specific surface area of 80 m²/g or less, it is possible to ensure the elastic modulus of the tire, which enables improvement of the steering stability.

In the case where the rubber composition contains a silica as the filler, in order to further improve the reinforcement performance and the low heat generating property of the compounded silica, it is preferable to further contain a silane coupling agent.

Examples of the silane coupling agent may include: bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylprpopyl-N,N-dimethylthiocarbamoyltetrasulfide, 3-triethoxysilylprpopyl-N,N-dimethylthiocarbamoyltetrasulfide, 2-triethoxysilylethyl-N,N-dimethylthiocarbamoyltetrasulfide, 3-trimethoxysilylpropylbenzothiazyltetrasulfide, 3-triethoxysilylpropylbenzolyltetrasulfide, 3-triethoxysilylpropylmethacrylatemonosulfide, 3-trimethoxysilylpropylmethacrylatemonosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, dimethoxymethylsilylpropylbenzothiazolyltetrasulfide, among which bis(3-triethoxysilylpropyl)trisulfide and 3-trimethoxysilylpropylbenzothiazoletetrasulfide are suited for use in view of the reinforcement improving effect.

These silane coupling agents may be used singly or in a combination of two or more.

A preferred content of the silane coupling agent in the rubber composition differs depending on the type of the silane coupling agent, but is preferably selected within a range of 2 to 25 mass% with respect to the silica. When the amount is less than 2 mass%, the silane coupling agent fails to fully exhibit the effect thereof, and when more than 25 mass%, there is a risk of causing gelation of the rubber component.

From the viewpoint of the effect as a coupling agent and gelation prevention, the content of this silane coupling agent is preferably within a range of 2 to 20 mass%, further preferably 5 to 18 mass%, particularly preferably 5 to 15 mass%.

The disclosed rubber composition may be compounded with, in addition to the aforementioned rubber component, thermoplastic resin and filler, other compounding agents generally used in the rubber industry, such as, for example, antioxidant, vulcanization accelerator, a vulcanization accelerator aid, and vulcanizing agent, which may be selected as appropriate without affecting the object of the present disclosure, within a range of general amount. Commercially available products may be suitably used as these additives. Further, the rubber composition can be manufactured with a well-known method, for example, by compounding the rubber components with the thermoplastic resin, the filler and various additives appropriately selected as necessary, and subjecting the same to kneading, warming, extrusion, etc.

The method for using the rubber composition to the tread rubber may be a well-known method as well. For example, it is possible to use the aforementioned rubber composition to the tread rubber to form a raw tire, and to manufacture a tire by vulcanizing the raw tire with a usual method.

### EXAMPLES

This disclosure will be explained in further details in the following according to examples, while this disclosure is not limited to the following examples.

### <Example 1>

### (Samples 1 to 31)

Rubber compositions were prepared according to the formulations shown in Table 1. The rubber compositions thus prepared were each used as the tread rubber to fabricate, with a general method, a radial tire in a size of 195/65R15 for a passenger vehicle. Here, the tread pattern of the fabricated tire used the one as illustrated in FIG. 1.

Further, the loss tangent (tan *δ*) and the storage modulus (E') of the tread rubbers using each rubber composition were measured according to the following conditions. By collecting specimens of 50mm×5mm×2mm from the tread portion of the tire, by using a spectrometer made by Ueshima Seisakusho Co., Ltd., the loss tangent (tan *δ*) at 0°C, 30°C and 60°C and the storage modulus (E') at 0°C were measured at the conditions of initial strain: 2%, dynamic strain: 1%, and frequency: 52 Hz. The measurement results were as shown shown in Table 1.

### (Evaluation)

Each sample of the obtained radial tires for passenger vehicle was subjected to the following evaluation. The evaluation results were as shown in Table 1.

### (1) Braking performance on steel-plate wet road surface

Four test tires were mounted onto a passenger vehicle of 2000 cc displacement. The passenger vehicle was run on a steel-plate wet road evaluation path as a test course. Then, the vehicle was braked at the speed of 40 km/h to lock the tires, so as to measure the distance it took to stop. The results thereof were indexed using the numeric value of Control Tire (comparative example) as 100 as to the inverse of the distance. A larger index value shows more excellent performance on a steel-plate wet road surface.

### (2) Braking performance on dry road surface

Four test tires were mounted onto a passenger vehicle of 2000 cc displacement. The passenger vehicle was run on an asphalt evaluation path as a test course. Then, the vehicle was braked at the speed of 80 km/h to lock the tires, so as to measure the distance it took to stop. The results thereof were indexed using the numeric value of Control Tire (Sample 1: comparative example) as 100 as to the inverse of the distance. A larger index value shows more excellent performance on a dry road surface.

### (3) Rolling Resistance

The rolling resistance of each tire in a size of 195/65R15 was measured by rolling on a rotating drum at a speed of 80 km/hr, with a load of 4.41 kN applied. The results thereof were indexed using the inverse of the rolling resistance of Control Tire (Sample 1: comparative example) as 100. A larger index value shows a low rolling resistance and more excellent rolling resistance performance.

### (4) Steering stability

The handling performance of each sample tire was evaluated with an actual vehicle test on dry road surface, based on feeling of a test driver. The results thereof were indexed using the dry performance of Control Tire (Sample 1: comparative example) as 100, where a larger index value shows excellent handling performance and excellent steering stability.

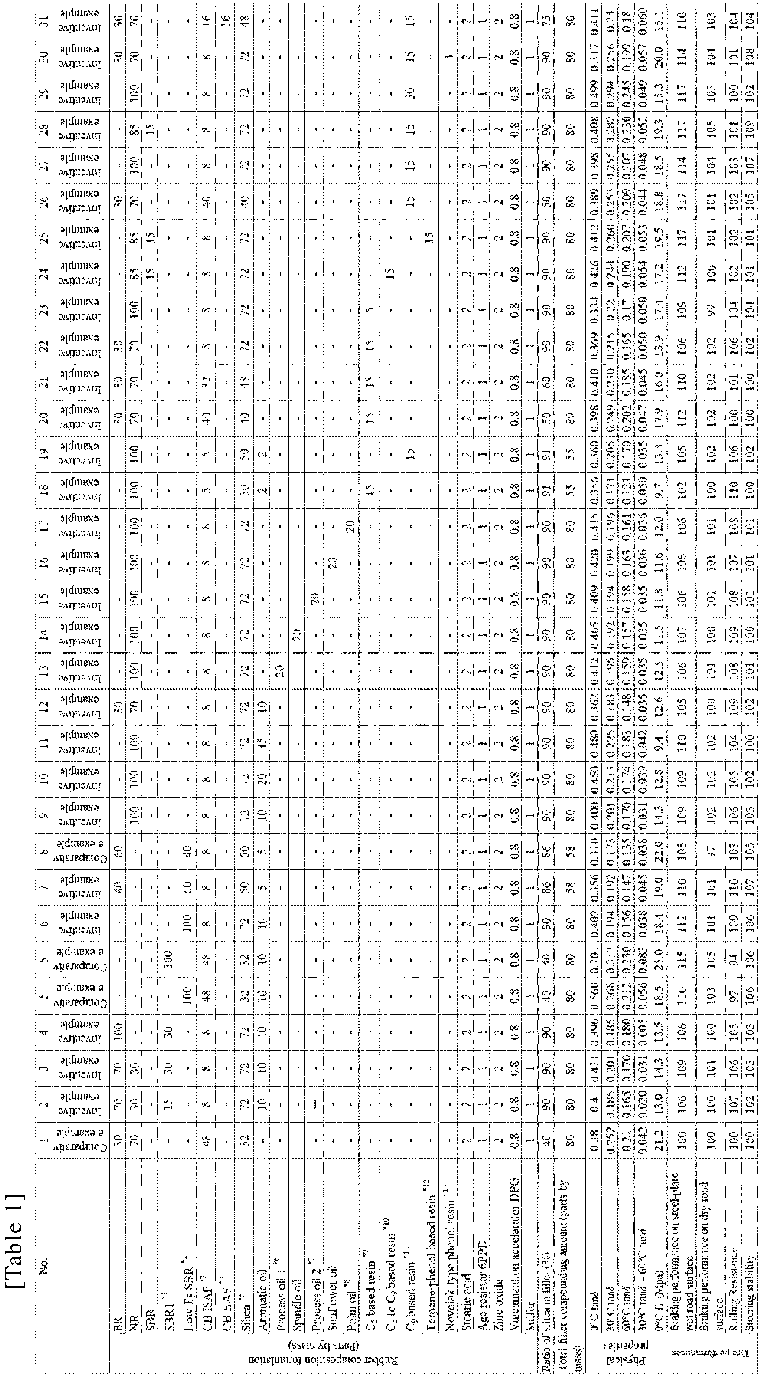

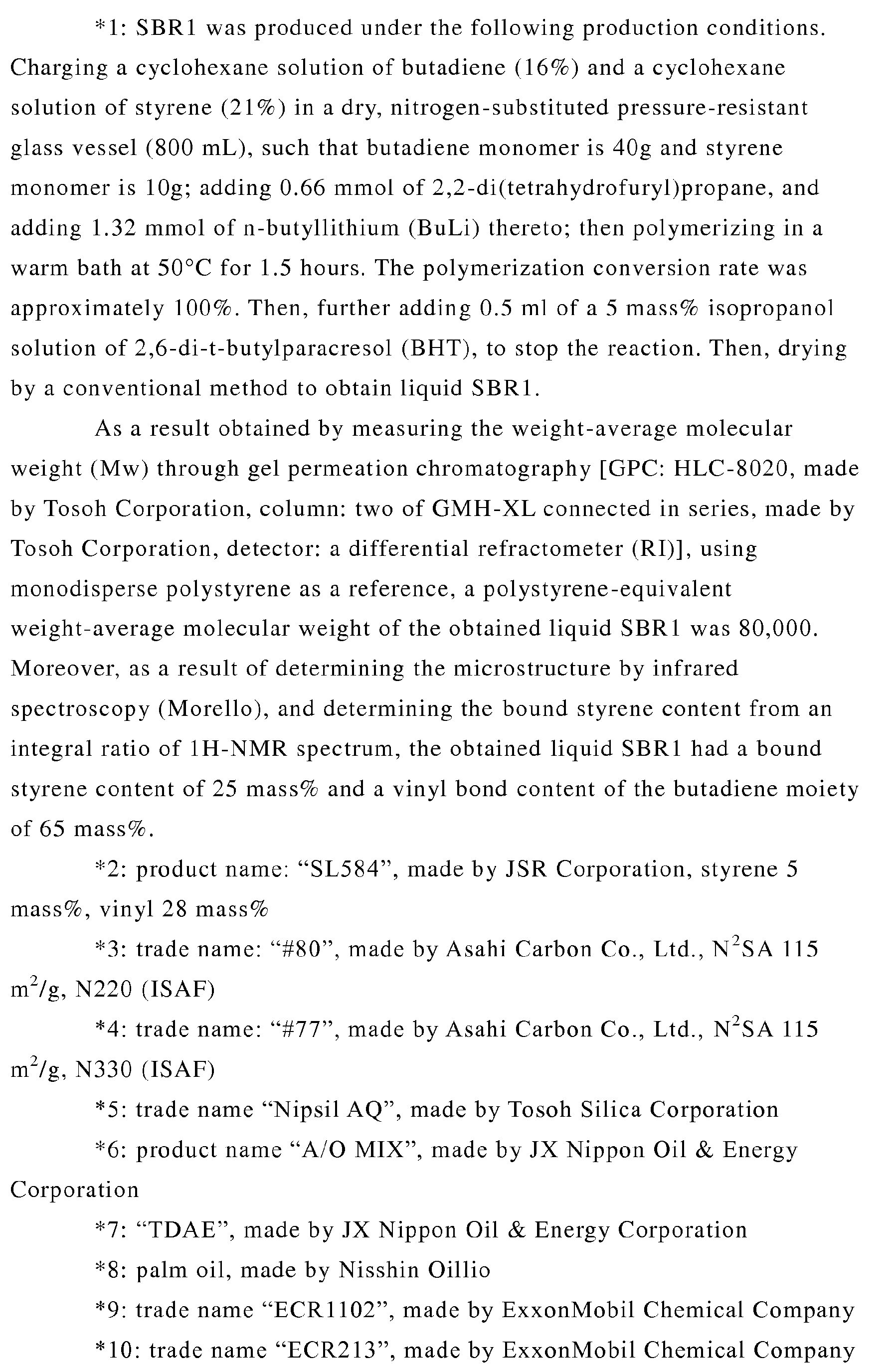

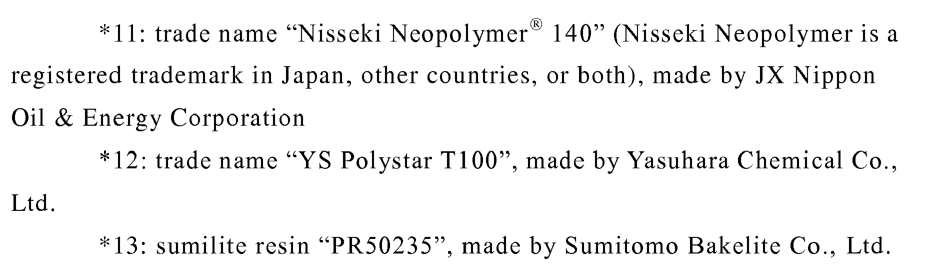

From the results in Table 1, it was understood that each example of this disclosure obtained results equal to or better than the comparative examples. From the comparison between the comparative examples and this disclosure, it was understood that by increasing the silica compounding ratio in the filler, it is possible to particularly improve the braking performance on steel-plate wet road surface.

### <Example 2>

### (Sample 1 to 10)

Next, samples of tires (size: 195/65R15) having treads under the conditions in Table 2 were produced experimentally.

The condition of the negative ratio in the contact patch of the tread (inclusive of the negative ratio derived from circumferential groove), the condition of the central region (the ratio of the central region, the independent land portion width, and the conditions of the lug grooves and the narrow grooves (the widthwise narrow grooves)) and the condition of the side regions (the condition of the lug grooves) of each sample was as shown in Table 1.

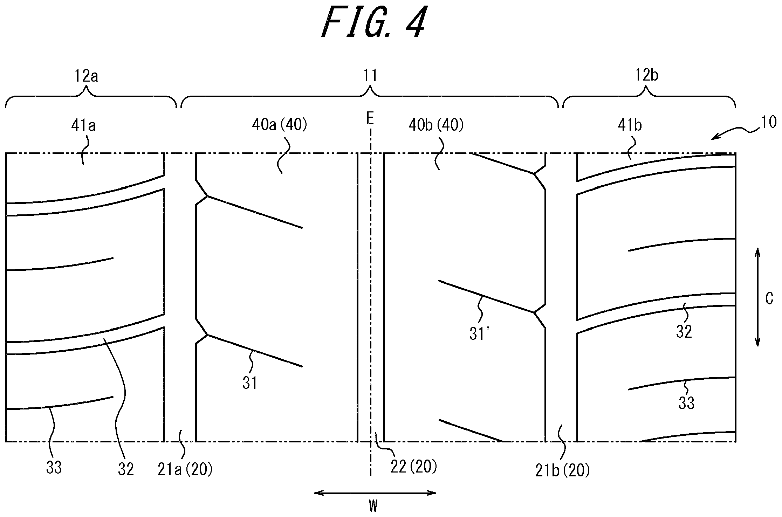

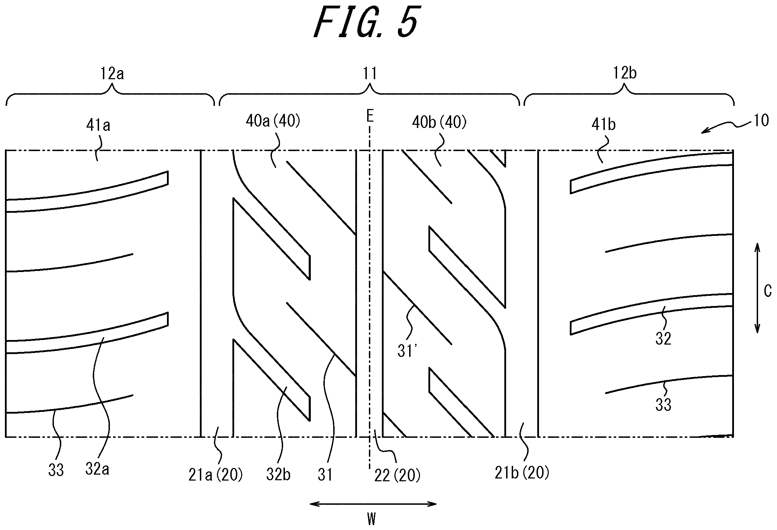

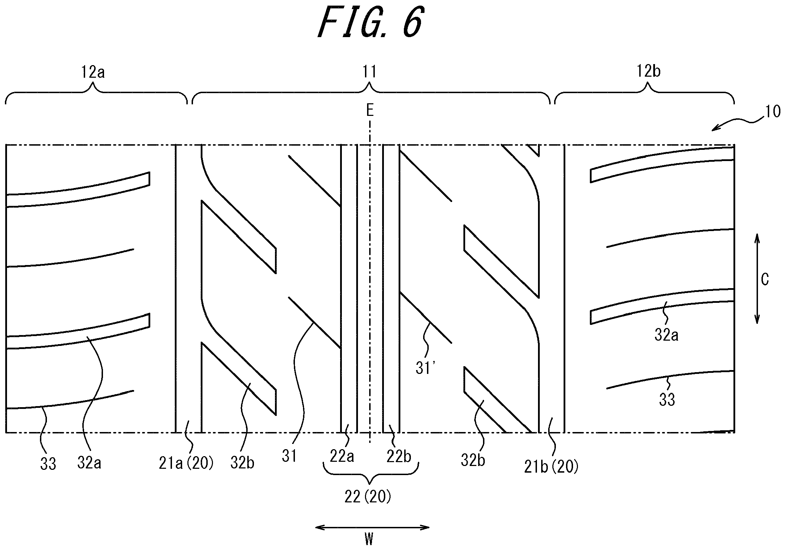

Further, the outline of the treads of each sample was as illustrated in FIGS. 1 to 6.

Moreover, each of the rubber compositions used in the treads of each sample was prepared according to Formulation A in Table 4.

### (Sample 11 to 20)

Moreover, samples of tires (size: 195/65R15) having treads under the conditions in Table 3 were produced experimentally.

The condition of the negative ratio in the contact patch of the tread (inclusive of the negative ratio derived from circumferential groove), the condition of the central region (the ratio of the central region, the independent land portion width, and the conditions of the lug grooves and the narrow grooves (the widthwise narrow grooves)) and the condition of the side regions (the condition of the lug grooves) of each sample was as shown in Table 1.

Further, the outline of the treads of each sample was as illustrated in FIGS. 1 to 6.

Moreover, each of the rubber compositions used in the treads of each sample was prepared according to Formulation B in Table 4.

### (Evaluation)

Samples 1 to 20 were subjected to the following evaluation. The evaluation results were as shown in Tables 2 and 3.

### (1) Cornering power index

The cornering force of each sample when the slip angle is 1° was measured in a state mounted to an approved rim at an air pressure of 230 kPa, and applied with a load of 4.22 kN.

The results thereof were indexed using as 100 the cornering force of Sample 1 as for Table 2, and Sample 11 as for Table 3. The results were as shown in Table 1. Here, a larger index value shows a larger cornering power and more excellent steering stability.

### (2) Wet road turning G index

Each sample was mounted to a vehicle, and was run while varying the turning radius on a steady-state circular course under the conditions of speed: 60 km and water depth: 2 mm. At this time, the vehicle G when running at a maximum radius such that the vehicle does not leave the course was measured with an accelerometer installed at a vehicle barycenter position.

The results thereof were indexed using as 100 the vehicle G of Sample 1 as for Table 2, and Sample 11 as for Table 3. The results were as shown in Table 1. Here, a larger index value shows a higher limit grip force and more excellent steering stability on wet road surface.

**[Table 2]**

| Sample | | | 1 | 2 | 3 | 4 | 5 | 6 | 7 | 8 | 9 | 10 |
|---|---|---|---|---|---|---|---|---|---|---|---|---|
| Conditions | | | Comparative example | Inventive example | Inventive example | Inventive example | Inventive example | Inventive example | Comparative example | Comparative example | Reference example | Inventive example |
| Image of tread | | | FIG. 1 | FIG. 2 | FIG. 2 | FIG. 2 | FIG. 3 | FIG. 4 | FIG. 1 | FIG. 1 | FIG. 5 | FIG. 1 |
| Negative ratio on contact patch | Circumferential grooves | % | 11 | 11 | 11 | 11 | 11 | 11 | 7 | 17 | 11 | 11 |
| | Grooves other than circumferential grooves | % | 19 | 11 | 9 | 9 | 9 | 9 | 6 | 13 | 9 | 9 |
| | Total negative ratio | % | 30 | 20 | 20 | 20 | 20 | 20 | 13 | 30 | 20 | 20 |
| | Comparison of side land portion row and central land portion row | - | Larger central land portion row | Larger side land portion row | Larger side land portion row | Larger side land portion row | Larger side land portion row | Larger side land portion row | Larger side land portion row | Larger side land portion row | Larger side land portion row | Larger side land portion row |
| Conditions of central land portion row | Ratio of central land portion row | % | 45 | 45 | 45 | 50 | 50 | 50 | 45 | 45 | 55 | 50 |
| | Land portion width/adjacent main groove depth | - | 3.6 | 3.6 | 3.6 | 4.4 | 4.4 | 4.4 | 5.5 | 2.5 | 1.4 | 4.4 |
| | Presence/absence of lug grooves | - | Presence | Presence | Presence | Presence | Absence | Absence | Presence | Presence | Presence | Absence |
| | Area ratio of raised bottom region of lug groove | % | 55 | 20 | 20 | 20 | 0 | 0 | 55 | 55 | 55 | 0 |
| | Type of narrow grooves | - | Sipe | Sipe | Sipe | Sipe | Sipe | Sipe | Sipe | Sipe | Sipe | Sipe |
| | Arranging spacing of narrow grooves / tread circumferential length | % | 1.1 | 1.1 | 1.1 | 1.1 | 1.1 | 1.1 | 1.1 | 1.1 | 1.1 | 5 |
| | Extension angle with respect to tire circumferential direction of sipes | - | 40 | 40 | 40 | 40 | 70 | 70 | 40 | 40 | 40 | 70 |
| Conditions of side land portion row | Penetration of shoulder lugs to main groove | - | Absence | Absence | Absence | Absence | Presence | Presence | Absence | Absence | Absence | Presence |
| | Raised bottom of shoulder tugs | - | Absence | Absence | Absence | Absence | Presence | Presence | Absence | Absence | Absence | Presence |
| | Raised bottom region cross-sectional area / lug groove cross-sectional area | % | 0 | 0 | 0 | 0 | 25 | 25 | 0 | 0 | 0 | 25 |
| | Lug groove width | - | Constant | Constant | Constant | Constant | Constant | Smaller on circumferential groove side | Constant | Constant | Constant | Smaller on circumferential groove side |
| Performance evaluation | Cornering power index | Index | 100 | 103 | 102 | 104 | 107 | 108 | 104 | 96 | 97 | 110 |
| | Wet road turning G index | Index | 100 | 100 | 100 | 100 | 101 | 103 | 97 | 105 | 100 | 98 |

**[Table 3]**

| Sample | | | 11 | 12 | 13 | 14 | 15 | 16 | 17 | 18 | 19 | 20 |
|---|---|---|---|---|---|---|---|---|---|---|---|---|
| Conditions | | | Comparative example | Inventive example | Inventive example | Inventive example | Inventive example | Inventive example | Comparative example | Comparative example | Reference example | Inventive example |
| Image of tread | | | FIG. 1 | FIG. 2 | FIG. 2 | FIG. 2 | FIG. 3 | FIG. 4 | FIG. 1 | FIG. 1 | FIG. 5 | FIG. 1 |
| Negative ratio on contact patch | Circumferential grooves | % | 11 | 11 | 11 | 11 | 11 | 11 | 7 | 17 | 11 | 11 |
| | Grooves other than circumferential grooves | % | 19 | 11 | 9 | 9 | 9 | 9 | 6 | 13 | 9 | 9 |
| | Total negative ratio | % | 30 | 20 | 20 | 20 | 20 | 20 | 13 | 30 | 20 | 20 |
| | Comparison of side land portion row and central land portion row | - | Larger central land portion row | Larger side land portion row | Larger side land portion row | Larger side land portion row | Larger side land portion row | Larger side land portion row | Larger side land portion row | Larger side land portion row | Larger side land portion row | Larger side land portion row |
| Conditions of central land portion row | Ratio of central land portion row | % | 45 | 45 | 45 | 50 | 50 | 50 | 45 | 45 | 55 | 50 |
| | Land portion width / adjacent main groove depth | - | 3.6 | 3.6 | 3.6 | 4.4 | 4.4 | 4.4 | 5.5 | 2.5 | 1.4 | 4.4 |
| | Presence/absence of lug grooves | - | Presence | Presence | Presence | Presence | Absence | Absence | Presence | Presence | Presence | Absence |
| | Area ratio of raised bottom region of lug groove | % | 55 | 20 | 20 | 20 | 0 | 0 | 55 | 55 | 55 | 0 |
| | Type of narrow groove | - | Sipe | Sipe | Sipe | Sipe | Sipe | Sipe | Sipe | Sipe | Sipe | Sipe |
| | Arranging spacing of narrow grooves / tread circumferential length | % | 1.1 | 1.1 | 1.1 | 1.1 | 1.1 | 1.1 | 1.1 | 1.1 | 1.1 | 5 |
| | Extension angle with respect to tire circumferential direction of sipes | - | 40 | 40 | 40 | 40 | 70 | 70 | 40 | 40 | 40 | 70 |
| Conditions side land of portion row | Penetration of shoulder lugs to main groove | - | Absence | Absence | Absence | Absence | Presence | Presence | Absence | Absence | Absence | Presence |
| | Raised bottom of shoulder lugs | - | Absence | Absence | Absence | Absence | Presence | Presence | Absence | Absence | Absence | Presence |
| | Raised bottom region cross-sectional area / lug groove cross-sectional | % | 0 | 0 | 0 | 0 | 25 | 25 | 0 | 0 | 0 | 25 |
| | Lug groove width | - | Constant | Constant | Constant | Constant | Constant | Smaller on circumferential groove side | Constant | Constant | Constant | Smaller on circumferential groove side |
| Performance evaluation | Cornering power index | Index | 100 | 102 | 103 | 105 | 106 | 108 | 104 | 95 | 97 | 110 |
| | Wet road turning G index | Index | 100 | 100 | 100 | 100 | 102 | 103 | 96 | 104 | 100 | 98 |

**[Table 4]**

| Formulation A (parts by mass per 100 parts by mass of rubber component) | | Formulation B (parts by mass per 100 parts by mass of rubber component) | |
|---|---|---|---|
| Natural rubber *1 | 100 | Natural rubber *1 | 85 |
| SBR1 *4 | 10 | Styrene-butadiene rubber *3 | 15 |
| Carbon black *2 | 8 | C9 based resin *6 | 15 |
| Silica *5 | 72 | Silica *5 | 72 |
| Silane coupling agent | 6 | Silane coupling agent | 6 |
| Aromatic oil | 10 | Carbon black *2 | 8 |
| Stearic acid | 2 | Stearic acid | 2 |
| Age resistor *9 | 1 | Zinc oxide | 2 |
| Zinc oxide | 2 | Age resistor | 1 |
| Vulcanization accelerator *10 | 0.8 | Vulcanization accelerator *10 | 0.8 |
| Sulfur | 1 | Sulfur | 1 |

| | | | |
|---|---|---|---|
| *1: natural rubber RSS#3 *2: trade name: "#80", made by Asahi Carbon Co., Ltd., N²SA 115 m²/g, N220 (ISAF) *3: styrene-butadiene copolymer rubber #1500 *4: SB1 was produced under the following production conditions. Charging a cyclohexane solution of butadiene (16%) and a cyclohexane solution of styrene (21%) in a dry, nitrogen-substituted pressure-resistant glass vessel (800 mL), such that butadiene monomer is 40g and styrene monomer is 10g; adding 0.66 mmol of 2,2-di(tetrahydrofuryl)propane, and adding 1.32 mmol of n-butyllithium (BuLi) thereto; then polymerizing in a warm bath at 50°C for 1.5 hours. The polymerization conversion rate was approximately 100%. Then, further adding 0.5 ml of a 5 mass% isopropanol solution of 2,6-di-t-butylparacresol (BHT), to stop the reaction. Then, drying by a conventional method to obtain liquid SBR1. As a result obtained by measuring the weight-average molecular weight (Mw) through gel permeation chromatography [GPC: HLC-8020, made by Tosoh Corporation, column: two of GMH-XL connected in series, made by Tosoh Corporation, detector: a differential refractometer (RI)], using monodisperse polystyrene as a reference, a polystyrene-equivalent weight-average molecular weight of the obtained liquid SBR1 was 80,000. Moreover, as a result of determining the microstructure by infrared spectroscopy (Morello), and determining the bound styrene content from an integral ratio of 1H-NMR spectrum, the obtained liquid SBR1 had a bound styrene content of 25 mass% and a vinyl bond content of the butadiene moiety of 65 mass%. *5: trade name "Nipsil AQ", made by Tosoh Silica Corporation *6: trade name "Nisseki Neopolymer® 140", made by JX Nippon Oil & Energy Corporation *10: 6PPD | | | |

From the results in Tables 2 and 3, it was understood that each sample of the examples of this disclosure showed excellent results for cornering power index and wet road turning G index, and obtained excellent steering stability. On the other hand, it was understood that as compared to each sample of the examples of this disclosure, each sample of the comparative examples was worse in at least one of the cornering power index and the wet road turning G index, i.e., the steering stability.

### INDUSTRIAL APPLICABILITY

According to this disclosure, it is possible to provide a tire having excellent braking performance on dry road surface and on wet road surface, and having excellent steering stability.

### REFERENCE SIGNS LIST

- 10: tread
- 11: central region
- 12, 12a, 12b: side region
- 20: circumferential groove
- 21, 21a, 21b: circumferential groove
- 22, 22a, 22b: circumferential groove
- 31, 31': widthwise narrow groove
- 32, 32a, 32b: lug groove
- 33: side region narrow groove
- 34, 34': lug groove
- E: tire equator
- C: tire circumferential direction
- W: tire width direction
- P: arranging interval of widthwise narrow groove
- X: independent land portion width of central region
- α: extension angle with respect to tire circumferential direction of narrow width groove
- S: cross-section area in extension direction of lug groove
- S1: cross-section area in lug groove extension direction in raised bottom region of lug groove

## Claims

1. A tire comprising a tread (10) formed by using a rubber composition of which a tan *δ* at 0°C measured under the conditions of initial strain of 2%, dynamic strain of 1%, and frequency of 52 Hz is 0.25 to 0.55, a difference between a tan*δ* at 30°C and a tan*δ* at 60°C measured under the conditions of initial strain of 2%, dynamic strain of 1%, and frequency of 52 Hz is -0.02 to 0.07, and a dynamic storage modulus at 0°C measured under the conditions of initial strain of 2%, dynamic strain of 1%, and frequency of 52 Hz is 4 MPa to 20 MPa, **characterised in that**:
the tread (10) has at least one circumferential groove (20, 21a, 21b, 22, 22a, 22b) extending continuously in a tire circumferential direction (C);
a negative ratio in a footprint of the tread (10) which is the outer circumferential surface around the entire circumference of the tire contacting the road surface when the tire is rotated in a state mounted to an applicable rim with specified air pressure filled and a load corresponding to the maximum load capability is 15% to 25%;
a negative ratio derived from the at least one circumferential groove (20, 21a, 21b, 22, 22a, 22b) in the footprint is 8% to 14%;
a negative ratio derived from grooves other than the at least one circumferential groove (20, 21a, 21b, 22, 22a, 22b) in the footprint is 7% to 11%;
the tread (10) has a central region (11) partitioned by two circumferential grooves (21a, 21b) located on tire widthwise outermost sides among the circumferential grooves (20, 21a, 21b, 22, 22a, 22b), and two side regions (12a, 12b) on tire widthwise outer sides of the central region (11);
a negative ratio of the two side regions (12a, 12b) in the footprint is larger than a negative ratio of the central region (11) in the footprint; and
a ratio of an area of a central land portion (40, 40a, 40b) located within the central region (11) to an area of an entire tire land portion on the footprint of the tread is from 40% to 60%, a land portion width (X) of the central land portion (40, 40a, 40b) being 1.5 times or more of a groove depth of a circumferential groove (20 21a, 21b, 22, 22a, 22b) adjacent on a tire widthwise outer side of the central land portion (40, 40a, 40b).

2. The tire according to claim 1, wherein:
the central land portion (40, 40a, 40b) has a plurality of widthwise narrow grooves (31, 31') which open to one of the circumferential grooves (20, 21a, 21b, 22, 22a, 22b) and do not connect to another adjacent circumferential groove (20, 21a, 21b, 22, 22a, 22b).

3. The tire according to claim 2, wherein:
the widthwise narrow grooves extend in a direction at 50° to 85° with respect to the tire circumferential direction (C).

4. The tire according to claim 2 or 3, wherein:
the widthwise narrow grooves (31, 31') are arranged alternately in the tire circumferential direction (C) with widthwise narrow grooves (31, 31') extending oppositely across a tire equator, an arranging interval (P) in the tire circumferential direction (C) of widthwise narrow grooves (31, 31') opening to the same circumferential groove (20, 21a, 21b, 22, 22a, 22b) being 0.5% to 4.5% of a circumferential length of a tire equatorial plane on a tread surface.

5. The tire according to any one of claims 2 to 4, wherein:
the widthwise narrow grooves (31, 31') are comprised of sipes and/or notch grooves.

6. The tire according to any one of claims 1 to 5, wherein:
side land portions (41a, 41b) located within the side regions (12a, 12b) have lug grooves (32, 32a), each of the lug grooves (32, 32a) not connecting to an adjacent one of the circumferential grooves (20, 21a, 21b), or connecting to the adjacent one of the circumferential grooves (20, 21a, 21b) in a state where a part of a groove bottom of the lug grooves (32, 32a) is raised up.

7. The tire according to any one of claims 1 to 6, wherein:
the tread (10) is formed with a rubber composition containing: a rubber component **A** containing 50 mass% or more of a diene based rubber; and 5 to 50 parts by mass per 100 parts by mass of the rubber component of at least one additive component **B** selected from a thermoplastic resin, an oil or a low molecular weight aromatic vinyl compound-conjugated diene compound copolymer with a polystyrene-equivalent weight-average molecular weight of 5,000 to 200,000 measured by gel permeation chromatography.

8. The tire according to claim 7, wherein:
the diene based rubber is a natural rubber or a butadiene rubber.

9. The tire according to claim 7 or 8, wherein:
the thermoplastic resin is a C5 based resin, a C9 based resin, a C5 to C9 based resin, a dicyclopentadiene based resin, a rosin based resin, an alkylphenol based resin, or a terpenephenol based resin.

10. The tire according to any one of claims 7 to 9, wherein:
the additive component **B** contains a Novolac-type phenol resin.

11. The tire according to any one of claims 7 to 10, wherein:
the rubber composition further contains a carbon black with a nitrogen adsorption specific surface area of 110 m²/g or more and a carbon black with a nitrogen adsorption specific surface area of 80 m²/g or less.

12. The tire according to any one of claims 1 to 6, wherein:
the rubber composition contains 50 mass% or more of a styrene-butadiene rubber of which the percentage of a bound styrene content among all polymer units + the percentage of a vinyl bond content among all polymer units × 1/2 equals 25% or less.

## Patentansprüche

1. Reifen, beinhaltend eine Lauffläche (10), gebildet durch eine Kautschukzusammensetzung, bei welcher ein tan *δ* bei 0°C, gemessen unter den Bedingungen einer anfänglichen Belastung von 2 %, einer dynamischen Belastung von 1 % und einer Frequenz von 52 Hz 0,25 bis 0,55 beträgt, eine Differenz zwischen einem tan*δ* bei 30°C und einem tan *δ* bei 60°C, gemessen unter den Bedingungen eine anfänglicher Belastung von 2 %, einer dynamischen Belastung von 1 % und einer Frequenz von 52 Hz -0,02 bis 0.07 beträgt, und ein dynamisches Speichermodul bei 0°C, gemessen unter den Bedingungen einer anfänglichen Belastung von 2 %, einer dynamischen Belastung von 1 % und einer Frequenz von 52 Hz 4 MPa bis 20 MPa beträgt, **dadurch gekennzeichnet, dass**:
die Lauffläche (10) mindestens eine Umfangsrille (20, 21a, 21b, 22, 22a, 22b) aufweist, welche sich kontinuierlich in einer Reifenumfangsrichtung (C) erstreckt;
ein negatives Verhältnis in einem Abdruck der Lauffläche (10), welches die äußere Umfangsoberfläche um den gesamten Umfang des Reifens ist, welche mit der Straßenoberfläche in Kontakt geht, wenn der Reifen in einem Zustand gedreht wird, in welchem er an einer anwendbaren Felge montiert ist und mit spezifiziertem Luftdruck gefüllt ist, und eine Last, welche der maximalen Belastbarkeit entspricht, 15 % bis 25 % beträgt;
ein negatives Verhältnis, welches von der mindestens einen Umfangsrille (20, 21a, 21b, 22, 22a, 22b) in dem Abdruck abgeleitet wird, 8 % bis 14 % beträgt;
ein negatives Verhältnis, welches von anderen als der mindestens einen Umfangsrille (20, 21a, 21b, 22, 22a, 22b) in dem Abdruck abgeleitet wird, 7 % bis 11 % beträgt;
die Lauffläche (10) einen mittleren Bereich (11) aufweist, welcher durch zwei Umfangsrillen (21a, 21b) unterteilt wird, welche an in Reifenbreitenrichtung liegenden äußersten Seiten unter den Umfangsrillen (20, 21a, 21b, 22, 22a, 22b) befindlich sind, und zwei Seitenbereiche (12a, 12b) an in Reifenbreitenrichtung liegenden äußeren Seiten des mittleren Bereiches (11);
ein negatives Verhältnis der beiden Seitenbereiche (12a, 12b) in dem Abdruck größer als ein negatives Verhältnis des mittleren Bereiches (11) in dem Abdruck ist; und
ein Verhältnis einer Fläche eines mittleren Stegabschnittes (40, 40a, 40b), welcher innerhalb des mittleren Bereiches (11) befindlich ist, zu einer Fläche eines vollständigen Stegabschnittes an dem Abdruck der Lauffläche zwischen 40 % und 60 % beträgt, wobei eine Stegabschnittbreite (X) des mittleren Stegabschnittes (40, 40a, 40b) 1,5 mal eine Rillentiefe oder darüber einer Umfangsrille (20 21a, 21b, 22, 22a, 22b) beträgt, welche an eine in Reifenbreitenrichtung liegende äußere Seite des mittleren Stegabschnittes (40, 40a, 40b) angrenzt.

2. Reifen nach Anspruch 1, bei welchem:
der mittlere Stegabschnitt (40, 40a, 40b) eine Vielzahl von in Breitenrichtung liegenden schmalen Rillen (31, 31') aufweist, welche sich auf eine der Umfangsrillen (20, 21a, 21b, 22, 22a, 22b) öffnet und sich nicht mit einer anderen angrenzenden Umfangsrille (20, 21a, 21b, 22, 22a, 22b) verbindet.

3. Reifen nach Anspruch 2, bei welchem:
die in Breitenrichtung liegenden schmalen Rillen sich in eine Richtung von 50° bis 85° in Bezug auf die Reifenumfangsrichtung (C) erstrecken.

4. Reifen nach Anspruch 2 oder 3, bei welchem:
die in Breitenrichtung liegenden schmalen Rillen (31, 31') im Wechsel in der Reifenumfangsrichtung (C) mit in Breitenrichtung liegenden schmalen Rillen (31, 31') angeordnet sind, welche sich entgegengesetzt über einen Reifenäquator erstrecken, wobei ein Anordnungsintervall (P) in der Reifenumfangsrichtung (C) von in Breitenrichtung liegenden schmalen Rillen (31, 31'), welche sich auf dieselbe Umfangsrille (20, 21a, 21b, 22, 22a, 22b) öffnen, 0,5 % bis 4,5 % einer Umfangslänge einer Reifenäquatorebene an einer Laufflächenoberfläche beträgt.

5. Reifen nach einem der Ansprüche 2 bis 4, bei welchem:
die in Breitenrichtung liegenden schmalen Rillen (31, 31') aus Lamellen und/oder Kerbrillen bestehen.

6. Reifen nach einem der Ansprüche 1 bis 5, bei welchem:
Seitenstegabschnitte (41a, 41b), welche innerhalb von Seitenbereichen (12a, 12b) befindlich sind, Stollenrillen (32, 32a) aufweisen, wobei jede der Stollenrillen (32, 32a) sich nicht mit einer angrenzenden der Umfangsrillen (20, 21a, 21b) verbindet, oder sich mit der einen angrenzenden der Umfangsrinnen (20, 21a, 21b) in einem Zustand verbindet, in welchem ein Teil des Rillengrundes der Stollenrillen (32, 32a) angehoben ist.

7. Reifen nach einem der Ansprüche 1 bis 6, bei welchem:
die Lauffläche (10) aus einer Kautschukzusammensetzung gebildet ist, welche Folgendes enthält:
eine Kautschukkomponente **A,** welche 50 Gewichtsprozent oder darüber eines Dien-basierten Kautschuks enthält; und 5 bis 50 Gewichtsanteile in Bezug auf 100 Gewichtsanteile der Kautschukkomponente von mindestens einer Zusatzkomponente **B,** gewählt aus einem thermoplastischen Harz, einem Öl oder einem mit einer aromatischen Vinyl-Zusammensetzung mit geringem Molekulargewicht konjugierten Dien-Zusammensetzungs-Copolymer mit einem Polystyrol-äquivalenten gewichtsmittleren Molekulargewicht von 5.000 bis 200.000, gemessen anhand von Gelpermeationschromatografie.

8. Reifen nach Anspruch 7, bei welchem:
der Dien-basierte Kautschuk Naturkautschuk oder ein Butadienkautschuk ist.

9. Reifen nach Anspruch 7 oder 8, bei welchem:
das thermoplastische Harz ein C5-basiertes Harz, ein C9-basiertes Harz, ein C5-bis C9-basiertes Harz, ein Dicyclopentadien-basiertes Harz, ein Kolophonium-basiertes Harz, ein Alkylphenol-basiertes Harz oder ein Terpenphenol-basiertes Harz ist.

10. Reifen nach einem der Ansprüche 7 bis 9, bei welchem:
die Zusatzkomponente B ein Phenolharz vom Typ Novolac enthält.

11. Reifen nach einem der Ansprüche 7 bis 10, bei welchem:
die Kautschukzusammensetzung zudem ein Rußschwarz mit einer durch Stickstoffadsorption gemessenen spezifischen Oberfläche von 110 m²/g oder darüber und ein Rußschwarz mit einer durch Stickstoffadsorption gemessenen spezifischen Oberfläche von 80 m²/g oder darunter enthält.

12. Reifen nach einem der Ansprüche 1 bis 6, bei welchem:
die Kautschukzusammensetzung 50 Gewichtsprozent oder darüber eines StyrolButadien-Kautschuks enthält, dessen Prozentsatz an einem gebundenen Styrolgehalt unter allen Polymereinheiten + dem Prozentsatz eines vinylgebundenen Gehaltes unter allen Polymereinheiten x 1/2 gleich 25 % oder darunter beträgt.

## Revendications

1. Pneu comprenant une bande de roulement (10) formée en utilisant une composition de caoutchouc dont un tan *δ* à 0°C mesurée dans les conditions de contrainte initiale de 2 %, une contrainte dynamique de 1 % et une fréquence de 52 Hz est de 0,25 à 0,55, une différence entre un tan *δ* à 30°C et un tan*δ* à 60°C mesurée dans les conditions de contrainte initiale de 2 %, une contrainte dynamique de 1 % et une fréquence de 52 Hz est de -0,02 à 0,07, et un module de stockage dynamique à 0°C mesuré dans les conditions de contrainte initiale de 2 %, une contrainte dynamique de 1 %, et une fréquence de 52 Hz est de 4 MPa à 20 MPa, **caractérisé en ce que** :
la bande de roulement (10) présente au moins une rainure circonférentielle (20, 21a, 21b, 22, 22a, 22b) s'étendant de manière continuelle dans une direction circonférentielle du pneu (C) ;
un rapport négatif dans une empreinte de la bande de roulement (10) qui est la surface circonférentielle extérieure autour de toute la circonférence du pneu en contact avec la surface de la route lorsque le pneu tourne dans un état monté sur une jante applicable avec une pression d'air spécifiée remplie et une charge correspondant à la capacité de charge maximale est de 15 % à 25 % ;
un rapport négatif tiré de la au moins une rainure circonférentielle (20, 21a, 21b, 22, 22a, 22b) dans l'empreinte est de 8 % à 14 % ;
un rapport négatif tiré des rainures autres que la au moins une rainure circonférentielle (20, 21a, 21b, 22, 22a, 22b) dans l'empreinte est de 7% à 11% ;
la bande de roulement (10) présente une région centrale (11) divisée par deux rainures circonférentielles (21a, 21b) situées sur les côtés les plus à l'extérieur dans le sens de la largeur du pneu parmi les rainures circonférentielle (20, 21a, 21b, 22, 22a, 22b) et deux régions latérales (12a, 12b) sur les côtés extérieurs dans le sens de la largeur du pneu de la région centrale (11) ;
un rapport négatif des deux régions latérales (12a, 12b) dans l'empreinte est supérieur à un rapport négatif de la région centrale (11) dans l'empreinte ; et
un rapport entre une superficie d'une partie d'appui centrale (40, 40a, 40b) située dans la région centrale (11) et une surface d'une partie d'appui de pneu entière sur l'empreinte de la bande de roulement est comprise entre 40 % et 60 %, une largeur de partie d'appui (X) de la partie d'appui centrale (40, 40a, 40b) étant 1,5 fois ou plus la profondeur de rainure d'une rainure circonférentielle (20, 21a, 21b, 22, 22a, 22b) adjacente sur un côté extérieur dans le sens de la largeur du pneu de la partie d'appui centrale (40, 40a, 40b).

2. Pneu selon la revendication 1, dans lequel :
la partie d'appui centrale (40, 40a, 40b) présente une pluralité de rainures étroites dans le sens de la largeur (31, 31') qui s'ouvrent sur l'une des rainures circonférentielles (20, 21a, 21b, 22, 22a, 22b) et ne se connectent pas à une autre rainure circonférentielle adjacente (20, 21a, 21b, 22, 22a, 22b).

3. Pneu selon la revendication 2, dans lequel :
les rainures étroites dans le sens de la largeur s'étendent dans une direction à 50° à 85° relativement à la direction circonférentielle du pneu (C).

4. Pneu selon la revendication 2 ou 3, dans lequel :
les rainures étroites dans le sens de la largeur (31, 31') sont agencées en alternance dans la direction circonférentielle du pneu (C) avec des rainures étroites dans le sens de la largeur (31, 31') qui s'étendent à l'opposé à travers un équateur du pneu, un intervalle d'agencement (P) dans la direction circonférentielle du pneu (C) des rainures étroites dans le sens de la largeur (31, 31') s'ouvrant sur la même rainure circonférentielle (20, 21a, 21b, 22, 22a, 22b) étant de 0,5 % à 4,5 % d'une longueur circonférentielle d'un plan équatorial de pneu sur une surface de bande de roulement.

5. Pneu selon l'une quelconque des revendications 2 à 4, dans lequel :
les rainures étroites dans le sens de la largeur (31, 31') comprennent des lamelles et/ou cannelures à encoches.

6. Pneu selon l'une quelconque des revendications 1 à 5, dans lequel :
des parties d'appui latérales (41a, 41b) situées dans les régions latérales (12a, 12b) présentent des gorges transversales (32, 32a), chacune des gorges transversales (32, 32a) ne se reliant pas à une rainure adjacente des rainures circonférentielles (20, 21a, 21b), ou se reliant à une rainure adjacente des rainures circonférentielles (20, 21a, 21b) dans un état où une partie d'un fond de rainure des gorges transversales (32, 32a) est surélevé.

7. Pneu selon l'une quelconque des revendications 1 à 6, dans lequel :
la bande de roulement (10) est formée d'une composition de caoutchouc contenant :
un composant de caoutchouc **A** contenant 50 % en masse ou plus d'un caoutchouc à base de diène ; et 5 à 50 parties en masse par 100 parties en masse du composant de caoutchouc d'au moins un composant additif **B** sélectionné à partir d'une résine thermoplastique, une huile ou un copolymère de composé de diène conjugué de composé de vinyle aromatique à faible masse moléculaire avec une masse moléculaire moyenne en poids équivalente au polystyrène de 5 000 à 200 000 mesurés par une chromatographie par perméation de gel.

8. Pneu selon la revendication 7, dans lequel :
le caoutchouc à base de diène est un caoutchouc naturel ou un caoutchouc de butadiène.

9. Pneu selon la revendication 7 ou 8, dans lequel :
la résine thermoplastique est une résine à base de C5, une résine à base de C9, une résine à base de C5 à C9, une résine à base de dicyclopentadiène, une résine à base de colophane, une résine à base d'alkylphénol, ou une résine à base de terpénéphénol.

10. Pneu selon l'une quelconque des revendications 7 à 9, dans lequel :
le composant additif B contint une résine de phénol de type Novolac.

11. Pneu selon l'une quelconque des revendications 7 à 10, dans lequel :
la composition de caoutchouc contient en outre un noir de carbone avec une superficie spécifique d'adsorption d'azote de 110 m²/g ou plus et un noir de carbone avec une superficie spécifique d'adsorption d'azote de 80 m²/g ou moins.

12. Pneu selon l'une quelconque des revendications 1 à 6, dans lequel :
la composition de caoutchouc contient 50 % en masse ou plus d'un caoutchouc styrène-butadiène dont le pourcentage d'une teneur en styrène liée parmi toutes les unités de polymère + le pourcentage d'une teneur en liaison vinyle parmi toutes les unités de polymère × 1/2 est égale à 25 % ou moins.
